Europäisches Patentamt

European Patent Office

Office européen des brevets

(11) Publication number:

**0 391 423**
**A2**

## EUROPEAN PATENT APPLICATION

(21) Application number: **90106554.0**

(22) Date of filing: **05.04.90**

(51) Int. Cl.[5]: **G11B 7/24, G11B 7/26,**
**G11B 11/10**

(30) Priority: **06.04.89 JP 87306/89**
**06.04.89 JP 87307/89**

(43) Date of publication of application:
**10.10.90 Bulletin 90/41**

(84) Designated Contracting States:
**AT BE CH DE DK ES FR GB GR IT LI LU NL SE**

(71) Applicant: **MITSUI PETROCHEMICAL**
**INDUSTRIES, LTD.**
**2-5, Kasumigaseki 3-chome Chiyoda-ku**
**Tokyo 100(JP)**

(72) Inventor: **Tsuzukiyama, Koji**
**c/o Mitsui Petrochemical Ind. Ltd.,**
**Chigusa-Kaigan**
**Ichihara-shi, Chiba-ken(JP)**
Inventor: **Hashimoto, Hidehiko**
**c/o Mitsui Petrochemical Ind. Ltd.,**
**Chigusa-Kaigan**
**Ichihara-shi, Chiba-ken(JP)**

(74) Representative: **Hansen, Bernd, Dr.rer.nat. et**
**al**
**Hoffmann, Eitle & Partner Patentanwälte**
**Arabellastrasse 4 Postfach 81 04 20**
**D-8000 München 81(DE)**

(54) Optical recording medium and method of making same.

(57) Disclosed is an optical recording medium comprising a substrate, a recording layer disposed on the substrate, and an protective film disposed on a light reflection side and/or light transmission side of the recording layer. The protective film includes at least Si, Cr and N.

Also disclosed is a method for making an optical recording medium having a recording layer and a protective film on the substrate comprising the steps of preparing a cathode comprising of an alloy target of Si and at least an element selected from the group of metal element, semimetal element and semiconductive element having less specific electric-resistance than Si, and performing a DC magnetron-sputtering in an atmosphere including at least an inert gas and $N_2$ gas to form a deposition of the protective film.

## OPTICAL RECORDING MEDIUM AND METHOD MAKING SAME

### BACKGROUND OF THE INVENTION

1. Field of the Invention

This invention relates to an optical recording medium having a recording layer and method for making the optical recording medium, and, more particularly, to an optical recording medium having a protective film which causes no film cracking, has an excellent optical enhance effect and has a superior protective function for the recording layer and method for making an optical recording medium with such a protective film in high working efficiency for the film deposition.

2. Description of the Prior Art

Of optical recording media with which the recording of information on the recording layer and the reproducing of the recorded information therefrom are performed through application of an energy beam such as laser and the like, there is known an optical recording medium of reproduction-only type such as a compact disc(CD) and CD-ROM, an optical recording medium of write-once type capable of recording, but not erasing of information, and an optical recording medium of re-writable type capable of freely re-writing of information. In recent years, the optical recording medium of re-writable type is particularly attractive because it has an advantage capable of freely re-writing of information.

As the optical recording medium of re-writable type, a magnetic-optical recording medium having a magnetic-optical recording layer which has an uniaxial magnetic anisotoropy perpendicular to a film surface of a film forming the recording layer and a phase change optical recording medium which uses a phase change between an amorphous and crystalline has been developed.

In the magnetic-optical recording medium, radiated on the recording layer is a laser light, resulting in a rotation of a polarization plane of the transmission light or reflective light responsive to the magnetization state(magnitude and/or direction) at the radiated portion, and thus with employing its phenomenon(Kerr effect and/or Farady effect) the magnetic-optical recording medium enables the reproduction of information. To make the information reproducing apparatus compact, presently the preferable use is the magnetic-optical recording medium of the type reproducing the information with employing the Kerr effect, because it is more easy to detect a rotational angle(Kerr rotational angle) in the polarization plane of the reflective light. Meanwhile, as the larger the Kerr rotational angle is, the less the readout error at the time of information reproduction, various attempts have been directed to the increasing of the Kerr rotational angle.

For example, Japanese laid-open patent publication No. 56-156943 discloses an interposition between the magnetic-optical recording film and the transparent substrate a protective film comprising a transparent dielectric film which functions as an enhance film for increasing the Kerr effect, thereby performing the apparent increase of the Kerr rotational angle. It is known that the material forming the protective film comprising a transparent dielectric film which functions as a Kerr effect enhance film is made of oxide such as $ZrO_2$, $TiO_2$, $Bi_2O_3$ and SiO and non-oxide such as CdS, $Si_3N_4$, AℓN, SiC and ZnS. The non-oxide transparent dielectric film is, in comparison with the oxide film, superior in the protective performance to improve a resistance to oxidation and to corrosion and thus be expected to be used as the protective film.

However, even if the transparent dielectric film comprising $Si_3N_4$ has a sufficient function as the protective film, but it has disadvantages that the refractive index is 1.8 to 2.0 and lower than that of the dielectric film forming material of the other non-oxide system(ZnS, CdS, SiC or the like), and the enhance effect of the Kerr effect is low.

To overcome these problems, it has been developed a technology that the transparent dielectric thin film comprising a main component of silicon nitride $Si_3N_4$ and a third component of an element(s) such as Ti, Zr, Mo or the like is used as a protective and Kerr effect enhance film as disclosed in Japanese laid-open patent publication No. 61-22458 corresponding to U.S.P. Nos. 4680742 and 4851096.

However, if the transparent dielectric thin film comprising $Si_3N_4$ is including the element(s) as the third component, superposed on the substrate and used as the protective and Kerr effect enhance film, there was a possibility that the film cracks are produced and the protective performance for the recording layer becomes low.

In addition, to deposit an enhancement layer of such a composition on the substrate there have been used heretofore a method which uses a co-sputtering of a $Si_3N_4$ target and an $\alpha$ element target, a method which uses a sputtering of a composite target with the a element chips on the $Si_3N_4$, a method which uses a reactive co-sputtering of a Si target and a $\alpha$ element target and a method which uses a reactive sputtering of a composite target with the $\alpha$ element chips on the Si target. However, if the $Si_3N_4$ target is used, an electric insulating property of the $Si_3N_4$ is high and if the Si target is used, a specific electric-resistance of Si is high and an insulating thin film is deposited on the Si target surface in case of the reactive sputtering, and it was therefore indispensable to employ a radio frequency (RF) sputtering and it was impossible to employ a direct current (DC) sputtering. The DC sputtering is, in comparison with the RF sputtering, high in the film deposition rate and superior in film deposition working efficiency and it has been expected to develop a film deposition technology for the protective film which relies upon the DC sputtering.

## SUMMARY OF THE INVENTION

The above-described drawbacks in the prior art have been successfully eliminated by the present invention.

Accordingly, it is an object of the present invention to provide an optical recording medium whose protective layer has a high resistance to corrosion and a high enhancing effect and no cracking.

It is another object of the present invention to provide a method for making the optical recording medium by forming such a protective film on a substrate and/or a recording layer with a high efficiency using a DC reactive sputtering.

The above-mentioned object of the present invention is achieved by an optical recording medium having recording layer on a substrate and a protective film on a light reflective side and/or a light transmission side of the recording layer, the protective film including at least Si, Cr and N.

It is preferable that an atomic ratio of Si and Cr included in the protective film is represented by $Si_{1-x} Cr_x$, where x satisfies $0.05 \leq x \leq 0.4$.

The optical recording medium according to the present invention intends to avoid a crack of a protective film and increase a protection effect of the protective film and an optical enhance effect, because the protective film includes Cr other than Si and N.

The above-mentioned object of the present invention is achieved by a method for making the optical recording medium by forming such protective film on a light reflective side and/or a light transmission side of the recording layer formed on substrate, by using an alloy target of Si and an element selected from the group of metal element, semimetal element and semiconductive element, having less specific electric-resistance than Si, preferably an alloy target of Si and Cr as a cathode and in an atmosphere of mixed gas containing at least inert gas and $N_2$ gas with a DC magnetron-sputtering. The alloy such as Si-Cr target enables to use a DC reactive sputtering which has not been used to form a silicone nitride film. As a result, a high working efficiency of forming a protective layer is achieved.

## BRIEF DESCRIPTION OF THE DRAWINGS

For a more complete understanding of the present invention and for further objects and advantages thereof, reference is now made to the following description taken in conjunction with the accompanying drawings in which:

Fig. 1 is a cross-sectional view of an embodiment of the optical recording medium according to the present invenion, and

Fig. 2 is a cross-sectional view of another embodiment of the optical recording medium according to the present invenion.

## DETAILED DESCRIPTION OF PREFERRED EMBODIMENTS

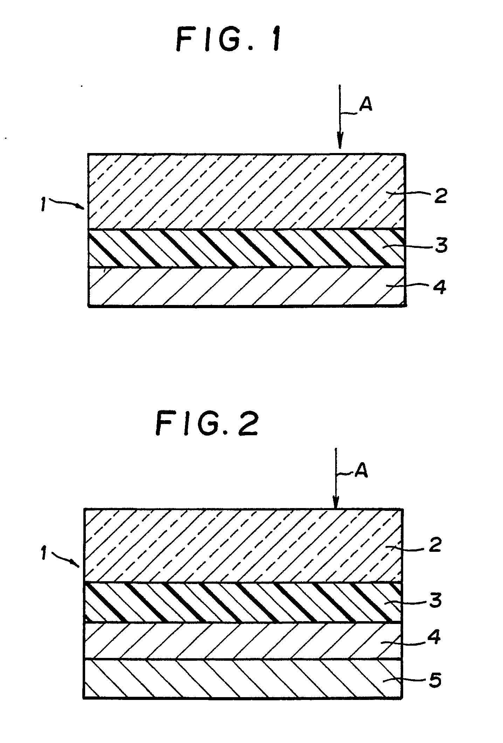

As illustrated in Fig. 1, an optical recording medium 1 according to the present invenion has ,for example, a structure in which a protective film 3 and a recording layer 4 are superposed on substrate 2 in the order mentioned. The optical recording medium according to the present invenion ,for example, may have another structure in which a protective film is formed not between the substrate 2 and the recording layer 4 but only on the surface of the recording layer 4, or a structure in which a protective film 3, a recording layer 4 and a protective film 3 are superposed on substrate 2 in succession. A reflective layer 5 and/or high thermal conductive layer may be formed on the surface of the recording layer 2 , as illustrated in Fig. 2, or on the protective film formed on the recording layer.

In the embodiments of Figs. 1 and 2, illustrated is the optical recording medium, which is designed so that an energy beam such as a laser beam incidents from the direction of arrow A and a variation of the optical property of reflected light to the opposite direction is measured. In these embodiments the protective film which is interposed between the substrate 2 and the recording layer 4, functions as an enhance layer to enhance the change of the optical property as well.

The material of the substrate 2 is not limited to a particular material, but is preferably a transparent one. Both inorganic materials such as glass or aluminium and organic materials such as polymethylmethacrylate, polycarbonate, polymeralloy of polycarbonate and polystyrene, ethylene-cycloolefin copolymer such as those disclosed in U.S.P. No. 4,614,778, including copolymers of ethylene with 1,4,5,8-dimethano-1, 2, 3, 4, 4a, 5, 8, 8a-octahydronaphthalene (tetracyclododecene), copolymers of ethylene with 2-methyl-1,4,5,8-dimethano-1,2,3,4,4a,5,8,8a-octahydronaphthalene (methyltetracyclododecene) and copolymers of ethylene with 2-ethyl-1,4,5,8-dimethano-1,2,3,4,4a,5,8,8a-octahydronaphthalene (ethyltetracyclododecene), poly-4-methyl-1-pentene, epoxy resin, polyethersulphone, polysulphone, polyether-imido, ethyrene/tetracyclododecene copolymer, are used as the substrate.

The material of the recording layer 4 is not limited to a particular material. But, when the recording layer is a magnetic-optical one, it prefers that the recording layer comprises of (a)at least one selected from 3d transition metals and (b) at least one element selected from rare earth metals, or (a) at least one selected from 3d transition metals, (b) at least one element selected from rare earth metals and (c) corrosion resistant metals.

Fe, Co, Ti, V, Cr, Mn, Ni, Cu or Zn is used for the 3d transition metal. Fe, Co or both is preferable.

The corrosion resistant metals enhance resistance to acid of the recording layer. Pt, Pd, Ti, Zr, Ta, Mo, Nb or the like is used for the corrosion resistant metal. Pt, Pd or Ti is preferable and Pt, Pd or both is more preferable.

Gd, Tb, Dy, Ho, Er, Tm, Yb, Lu, La, Ce, Pr, Nd, Pm, Sm or Eu is used for the rare earth element and Gd, Tb, Dy, Ho, Nd, Sm or Pr is preferable.

When the recording layer is other than a magnetic-optical recording layer, e.g. a phase-change recording layer, it is constituted of an alloy thin film including Te or Se as a main component, a Te-Ge-Sb alloy thin film, Te-Ge-Cr alloy thin film, Te-Ge-Zn alloy thin film, In-Sb-Te alloy thin film or the like.

The material of a reflective layer 5 shown by Fig. 2, also is not limited to a particular material.

For instance, Ni alloy having thermal conductivity of 2 J/cm·sec·K, Pt whose thermal conductivity is 0.71 J/cm·sec·K, Pd whose thermal conductivity is 0.76 J/cm·sec·K, Ti whose thermal conductivity is 0.22 J/cm·sec·K, Co whose thermal conductivity is 0.99 J/cm·sec·K, Zr whose thermal conductivity is 0.23 J/cm·sec·K and alloy of these metals are exemplified.

Al alloy such as Al-Hf alloy, Al-Hf-Ti alloy, Al-Cr-Ti alloy, Al-Nb alloy, Al-Cr-Hf alloy, Al-Ti-Nb alloy, Al-Mg-Hf alloy, Al-Mg-Ti alloy, Al-Mg-Nb alloy, Al-Mg-Ti-Hf alloy and Al-Mg-Cr alloy is used for the high thermal conductive layer. The contents of metals other than Al in these alloys are preferably 10 atomic % or less.

The protective film of the optical recording medium according to the present invention is constituted of a thin film including at least Si, Cr and N. The atomic ratio of these elements is represented by the following formula:

$(Si_{1-x}Cr_x)_{1-y}N_y$

wherein y satisfies $0.05 \leq x \leq 0.4$, preferably $0.1 \leq x \leq 0.3$ and y satisfies $0 < y \leq 0.9$, preferably $0.01 \leq y \leq 0.9$, more preferably $0.2 \leq y \leq 0.57$. A protective film including Si, Cr and N in this range, has a high protective effect, no cracking and a higher optical enhance effect than a protective film having no Cr. Moreover, this protective film enables to form the layer using DC reactive sputtering which has not been used to form a silicon nitride thin film including no Cr. As a result, a great advantage to working efficiency of forming the protective layer is obtained.

The recording layer 4 according to the present invention has a thickness of preferably from 50 to 5000 Å, more preferably from 100 to 2000 Å. The protective film 3 according to the present invention has a thickness of preferably from 50 to 5000 Å, more preferably from 100 to 3000 Å. The method of forming the protective film 3 on the substrate 2 or the recording layer 4 will be described hereinafter.

The protective film of this invention can be formed by reactive sputtering (RF reactive sputtering DC reactive sputtering) of a composite target with Cr chips on a Si target or of a Si-Cr alloy target in an atmosphere of mixed gases of inert gas and $N_2$. It preferred that the protective film is formed by reactive sputtering of a alloy target of Si and a metal having less relative electric resistance e.g. Cr, in an atmosphere of mixed gases of inert gas and $N_2$, where the reactive sputtering is preferably done by impressing direct current (DC). DC reactive sputtering is superior to RF sputtering in film deposition rate and working efficiency. He, Ne, Ar, Kr or the like is used for the inert gas, and Ar is preferable.

According to the method of the present invention, a stable DC sputtering is performed by using an alloy target of Si and Cr or the like. This may be due to that a glow discharge is stabilized by including the metal having less specific electric-resistance in the target.

The gas ratio of inert gas and $N_2$ on reactive sputtering for making a protective film, is 9:1-0:10, preferably 7:3-2:8.

A recording layer 4 is formed on the protective film 3 formed on the substrate 2 in one embodiment of this invention. According to the present invention, the protective film 3 is also formed on a recording layer 4 formed on substrate 2 or is also formed on a recording layer 4 which is formed on substrate having a protective film 3 thereon. Moreover, a reflective layer may be formed on the surface of the recording layer or the protective film.

According to the present invention, an optical recording medium having a protective film which has an excellent optical enhancing effect, high corrosion resistance and no cracking is obtainable, because it includes Cr other than Si and N in it's protective film. According to the present invention, the protective film can be formed on a recording layer or a substrate by using DC reactive sputtering which could not be used to form a Si-N thin film including no Cr hitherto, because of using an alloy target of such as Si-Cr as a cathode. As a result, a work efficiency is greatly improved.

The present invention will be described in more detail with reference to the following examples. It should be appreciated that the invention is in no way limited to the examples.

Example 1

A protective film including Si, Cr and N and having a thickness of about 1000Å was formed on an ethylene-tetracyclododecene copolymer substrate by reactive sputtering of a composite target having Cr chips placed on Si target, with impressed RF 500W power and in an atmosphere of mixed gases of Ar 20 SCCM and $N_2$ 20 SCCM (1.5 m Torr). An atomic ratio of Si and Cr was 67:33. Next, a recording layer of Tb-Fe-Co with about 1000Å thickness was formed on the protective film by DC magnetron sputtering under condition of 20-50 °C and $1.0 \times 10^{-7}$ Torr in an atmosphere of Ar. An optical recording medium was obtained by forming a protective film of Si-Cr-N with about 1000Å thickness on the recording layer by the same method as described above. Life test of this optical recording medium was done by placing it in an atmosphere of 85 °C and relative humidity of 85 RH for 1000 hours. The coercive force did not vary during this test.

An optical constant and the result of cracking test of this protective film are indicated in Table 1. The optical constant of the protective film was measured by an ellipsometer (at wave length 839 nm). The cracking test of the protective film formed on the substrate was done, before forming successive recording layer and a protective film.

Table 1

| | Refractive Index | Film Crack |
|---|---|---|
| Example 1 | 2.2 | O |
| Example 2 | 2.2 | O |
| Example 3 | 2.2 | O |
| Comp. Example 2 | 2.2 | x |
| Comp. Example 3 | 2.2 | x |
| Comp. Example 4 | 2.0 | x |
| Comp. Example 5 | 2.1 | x |
| Comp. Example 6 | 1.9 | x |
| Comp. Example 7 | 2.2 | x |
| Comp. Example 7 | 2.2 | x |

Note: In the column of film crack, O means that no cracking was seen and x means that there was some cracks in the layer.

Example 2

An optical recording medium was obtained by forming protective films of Si-Cr-N on both substrate and recording layer, with same way as described in the Example 1, except using a sintering alloy target of si and Cr (Cr 20 atm%) as a cathode. An atomic ratio of Si and Cr in the protective films was 80 : 20.

The coercive force (Hc) did not vary in the life test similar to Example 1. An optical constant of the protective film and the result of cracking test are also listed on table 1.

Referential Example

Before making an optical recording medium, the following tests were performed as to DC reactive sputtering.

Test 1: After vacuumizing the chamber to under $5 \times 10^{-5}$ Torr, DC reactive sputtering was done using an alloy target of Si and Cr (composition; $Si_{80}Cr_{20}$, size; 4 inch.) as a cathode with impressed DC300W, in an atmosphere of mixed gases of Ar gas 20 SCCM and $N_2$ gas 20 SCCM. It was assured that glow discharge was stable under this condition.

Test 2: Next, after the pressure of the chamber was back to atmospheric pressure by introducing air therein and was under $5 \times 10^{-5}$ Torr again, DC reactive sputtering was done similarly to above-mentioned method. Again glow discharge was assured to be stable.

Example 3

After vacuumizing the chamber to under $5 \times 10^{-5}$ Torr, DC reactive sputtering was done using an alloy target of Si and Cr (composition; $Si_{80}Cr_{20}$, size; 4 inch.) as a cathode with impressed DC300W, in an atmosphere (1.5 m Torr) of mixed gases of Ar gas 20 SCCM and $N_2$ gas 20 SCCM to deposit a protective film of Si-Cr-N having a thickness of about 1000Å on an ethylene-tetracyclododecene copolymer substrate.

Next, a recording layer of Tb-Fe-Co with about 1000Å thickness was formed on the protective film by DC magnetron sputtering of an alloy target of Tb-Fe-Co under condition of 20-50°C and $1.0 \times 10^{-7}$ Torr in an atmosphere of Ar. Then an optical recording medium was obtained by forming a protective film of Si-Cr-N having a thickness of about 1000Å on the recording layer, as similarly as described above. An atomic ratio of Si and Cr of the protective film was 80 : 20.

It was ascertained that glow discharge was stable during depositing the protective film. The coercive

6

force (Hc) did not vary in the life test as similar to Example 1. An optical constant of the protective film and the result of cracking test are also listed on Table 1.

Examples 4 - 9.

An optical recording medium was obtained as same method as Example 3, but the flow rate of mixed gases of Ar and $N_2$ was varied.

The flow rate of the gases, the formation rate and each optical constant of the protective films are listed on Table 2.

Table 2

| | Target | Power (W) | Gas (SCCM) | | Film Dep. Rate | Ref. Index | Film Crack |
|---|---|---|---|---|---|---|---|
| | | | Ar | $N_2$ | | | |
| Ex.4 | $Si_{80}Cr_{20}$ (alloy target) | DC300 | 20 | 20 | 105 | 2.2 | O |
| Ex.5 | $Si_{80}Cr_{20}$ (alloy target) | DC300 | 36 | 4 | 128 | 3.7 | O |
| Ex.6 | $Si_{80}Cr_{20}$ (alloy target) | DC300 | 28 | 12 | 121 | 2.7 | O |
| Ex.7 | $Si_{80}Cr_{20}$ (alloy target) | DC300 | 24 | 16 | 109 | 2.3 | O |
| Ex.8 | $Si_{80}Cr_{20}$ (alloy target) | DC300 | 16 | 24 | 97 | 2.3 | O |
| Ex.9 | $Si_{80}Cr_{20}$ (alloy target) | DC300 | 12 | 28 | 72 | 2.2 | O |
| Note: In the column of film crack, O means that no cracking was seen. | | | | | | | |

Comparative Example 1

Formation of protective film was tried by using Si target only as a cathode under same condition as Example 3. But discharge was not stable and the protective layer could not be formed.

Comparative example 2

An optical recording medium was obtained by forming protective films both on the substrate and recording layer, under the same condition as Example 1, except using a composite target of Si target with Mo chips thereon. The result was indicated on Table 1.

Comparative example 3

An optical recording medium was obtained by forming protective films both on the substrate and recording layer, under the same condition as Example 1, except using a composite target of Si target with Nd chips thereon. The result was indicated on Table 1.

Comparative example 4

An optical recording medium was obtained by forming protective films both on the substrate and recording layer, under the same condition as Example 1, except using a composite target of Si target with Tb chips thereon. The result was indicated on Table 1.

Comparative example 5

An optical recording medium was obtained by forming protective films both on the substrate and recording layer, under the same condition as Example 1, except using a composite target of Si target with Gd chips thereon. The result was indicated on Table 1.

Comparative example 6

An optical recording medium was obtained by forming protective films both on the substrate and recording layer, under the same condition as Example 1, except using a composite target of Si target with Co chips thereon. The result was indicated on Table 1.

Comparative example 7

An optical recording medium was obtained by forming protective films both on the substrate and recording layer, under the same condition as Example 1, except using a composite target of Si target with Ti chips thereon. An atomic ratio of Si and Ti in the protective film is 69:31. The result was indicated on Table 1.

Comparative example 8

An optical recording medium was obtained by forming protective films both on the substrate and recording layer, under the same condition as Example 1, except using a composite target of Si target with Zr chips thereon. An atomic ratio of Si and Zr in the protective film is 92:8. The result was indicated on Table 1.

It is assured that the protective films of Examples 1-3 have less incidence of cracking than those of Comparative Examples 1-8 and high refractivity and are applied for either protective film or optical enhancing layer.

While the invention has been described in detail and with reference to specific embodiments thereof, it will be apparent to one skilled in the art that various changes and modifications can be made therein without departing from the spirit and scope thereof.

## Claims

1. An optical recording medium comprising;
a substrate,
a recording layer disposed on the substrate, and
an protective film disposed on a light reflection side and/or light transmission side of said recording layer,
the protective film including at least Si, Cr and N.

2. The optical recording medium of claim 1 wherein an atomic ratio of Si and Cr included in the protective film is represented by $Si_{1-x}$-$Cr_x$, where x satisfies $0.05 \leq x \leq 0.4$.

3. The optical recording medium of any one of claims 1 to 2 wherein said recording layer consists of a magnetic-optical recording layer having an uniaxial magnetic anisotoropy perpendicular to a film surface of a film forming the recording layer.

4. The optical recording medium of any one of claims 1 to 3 wherein said recording layer consists of a thin film comprising a recording material variable in an optical property such as reflective and/or transmission factor.

5. A method for making an optical recording medium having a recording layer and a protective film on the substrate comprising the steps of:
preparing a cathode comprising of an alloy target of Si and at least an element selected from the group of metal element, semimetal element and semiconductive element having less specific electric-resistance than Si, and
performing a DC magnetron-sputtering in an atmosphere of mixed gas including at least an inert gas and $N_2$ gas to form a deposition of said protective film.

6. The method for making an optical recording medium of claim 5 wherein said protective film is disposed on a light reflection side and/or light transmission side of said recording layer.

8

7. The method for making an optical recording medium of claim 5 wherein said element having less specific electric-resistance than Si consists of Cr.

# FIG. 1

# FIG. 2